# FASCICULE DE BREVET EUROPEEN

(11) **EP 2 760 738 B1**
(45) Date de publication et mention de la délivrance du brevet: **14.02.2018**
(21) Numéro de dépôt: 12775781.3
(22) Date de dépôt: 27.09.2012
(51) Int. Cl.: B64C 25/04

(54) **CASE DE TRAIN D'ATTERRISSAGE AVANT AMÉLIORÉE**
VERBESSERTER FRONTFAHRWERKSCHACHT
IMPROVED FRONT LANDING-GEAR WELL

(30) Priorité: 30.09.2011 FR 1158802
(43) Date de publication de la demande: 06.08.2014
(73) Titulaire: Airbus Operations, 31060 Toulouse (FR)
(72) Inventeur: GUERING, Bernard, F-31850 Montrabe (FR); DURAND, Yves, F-31840 Aussonne (FR)
(74) Mandataire: Ahner, Philippe
(86) Numéro de dépôt international: PCT/FR2012/052194
(87) Numéro de publication internationale: WO 2013/045852

(56) Documents cités:
- US-A- 2 444 319
- US-A1- 2009 078 823

## Description

### DOMAINE TECHNIQUE

La présente invention se rapporte à une partie avant d'aéronef, également dénommée pointe avant, comprenant une case de train d'atterrissage logeant un train d'atterrissage avant.

L'invention s'applique à tous les types d'aéronefs.

### ETAT DE LA TECHNIQUE ANTERIEURE

La pointe avant des aéronefs a fait l'objet de nombreux développements visant à optimiser sa masse, son volume, son coût, sa sécurité, sa facilité de fabrication, de maintenance, etc. Une telle pointe avant est par exemple connue des documents FR 2 910 875, US2009/0078823 et US 7 784 736.

Malgré l'existence de nombreuses réalisations, l'environnement de la case de train d'atterrissage de la pointe avant peut encore être optimisé, notamment dans la manière de drainer les efforts introduits par la contrefiche briseuse du train d'atterrissage avant.

Habituellement, la case de train est réalisée à l'aide de panneaux raidis formant un logement isolé de la pression, la case étant contournée par un réseau de portiques assurant la rigidification des cadres du fuselage. Avec ce type de conception, les panneaux formant la case de train doivent présenter des dimensions importantes pour être capables de reprendre les efforts provenant du train d'atterrissage avant, et notamment ceux drainés par la contrefiche briseuse.

Cela génère des inconvénients en termes de masse, de volume, et force l'emploi d'un matériau métallique pour la réalisation des panneaux de la case de train. Par ailleurs, la solution décrite ci-dessus induit généralement des sollicitations mécaniques importantes au niveau de la zone avant de pare-brise, qui ne sont bien entendu pas désirées.

En outre, la pointe avant peut également être optimisée de manière à conférer un accès plus aisé aux opérateurs intervenant sur la fabrication / manutention de cette partie très dense.

En particulier, la zone pressurisée située au-dessus de la case de train, destinée à embarquer de nombreux équipements / matériels, reste souvent difficile d'accès pour les opérateurs.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet une partie avant d'aéronef comprenant un fuselage et une case de train logeant un train d'atterrissage avant comprenant une contrefiche briseuse conçue pour adopter une configuration déployée lorsque le train est sorti, configuration dans laquelle ladite contrefiche briseuse s'inscrit dans un plan de contrefiche parallèle à la direction transversale de la partie avant. Selon l'invention, la partie avant comprend une poutre transversale de reprise des efforts de contrefiche agencée au-dessus de la case de train et montée à ses deux extrémités sur le fuselage, ladite poutre présentant une section en forme globale de rectangle dont le plan médian parallèle à la longueur du rectangle est confondu avec ledit plan de contrefiche.

L'invention apporte ainsi une solution simple pour le drainage des efforts provenant de la contrefiche, à l'aide d'un élément structural en forme de poutre qui est orientée dans le même plan que celui de la contrefiche briseuse déployée, et qui participe à la création d'un chemin d'efforts plus direct vers le fuselage. Cet agencement géométrique particulier permet d'assurer une reprise saine des efforts de contrefiche, puisque ces derniers peuvent cheminer par effet de cisaillement vers les extrémités de la poutre, pour ensuite être diffusés dans le fuselage.

L'invention permet également d'utiliser des éléments de géométries simples, propices à une réalisation en matériau composite comprenant de préférence un mélange de résine et de fibres de carbone. L'utilisation de ce matériau, en particulier pour la poutre et les éléments définissant la case de train, confère un gain de masse non négligeable.

La masse est également abaissée grâce à la réduction de la dimension des éléments définissant la case de train, qui n'ont plus à remplir la fonction de reprise des efforts drainés par la contrefiche briseuse, cette fonction étant à présent assurée par la poutre dédiée. Cette réduction de masse s'accompagne naturellement d'une diminution du volume de la case de train. Cela conduit avantageusement à une augmentation des volumes pressurisés environnants, permettant l'intégration des fonctions de la pointe avant.

Enfin, l'invention limite fortement la diffusion des efforts de contrefiches en direction de la zone avant de pare-brise, ce qui réduit les risques de rupture de celui-ci.

De préférence, le rapport entre la longueur de la section rectangulaire de la poutre et la longueur de cette poutre est compris entre 3 et 6, et plus préférentiellement entre 4 et 5, et/ou le rapport entre la longueur et la largeur de la section rectangulaire est compris entre 8 et 12, et plus préférentiellement entre 9 et 11. Cet élément structural prend ainsi une forme de « poutre plane », de faible allongement, présentant une grande inertie dans le plan d'efforts dans lequel elle s'inscrit. Il en résulte une faible déformation de cette poutre, les efforts de contrefiche pouvant être dirigés directement, par effet de cisaillement, vers les extrémités de la poutre.

De préférence, ladite poutre de reprise des efforts de contrefiche s'étend à partir d'une cloison supérieure de la case de train, jusqu'à un plancher de ladite partie avant d'aéronef. Cela permet l'obtention d'une poutre de hauteur importante s'intégrant parfaitement dans son environnement, sans nécessiter de modification substantielle d'architecture de la pointe avant. La grande hauteur de la poutre, conférée par son très faible allongement, permet non seulement de renforcer sa rigidité, mais également de diminuer les concentrations de contraintes dans le fuselage, les efforts y étant introduits étant en effet répartis sur une plus grande interface. La distribution des efforts est donc avantageusement plus douce.

De préférence, lesdites deux extrémités de la poutre sont montées sur une peau dudit fuselage, permettant une très bonne diffusion / dilution des efforts dans ce fuselage. Il s'agit préférentiellement de la peau intérieure du fuselage, même si le montage pourrait alternativement ou simultanément s'effectuer sur les cadres de fuselage.

De préférence, ladite poutre présente un chant longitudinal inférieur équipé de moyens de montage de ladite contrefiche briseuse. Cela permet un transfert direct des efforts de contrefiche dans la poutre transversale. Alternativement, le chant longitudinal inférieur de la poutre pourrait être monté sur une structure intermédiaire qui porterait elle-même lesdits moyens de montage de ladite contrefiche briseuse. Cette structure intermédiaire pourrait par exemple être du type insert métallique rapporté sur la poutre, qui est de préférence réalisée en matériau composite.

Par ailleurs, comme évoqué ci-dessus, pour un gain de masse, ladite poutre est réalisée en matériau composite, de préférence du type mélange de résine et de fibres de carbone. Elle pourrait néanmoins être métallique, sans sortir du cadre de l'invention. A cet égard, il est noté que les cloisons définissant la case de train d'atterrissage pourraient également être en matériau composite.

De préférence, la case de train d'atterrissage avant comprend une cloison supérieure comportant au moins un capot amovible obturant un passage d'homme.

Cela permet d'utiliser le toit de la case de train pour permettre aux opérateurs de passer leur corps afin d'effectuer des opérations de fabrication / manutention dans l'environnement de la case de train. En particulier, il est de préférence prévu que l'opérateur puisse se tenir debout à travers la case de train, avec son corps traversant le passage d'homme.

L'invention permet ainsi de supprimer certaines trappes d'accès existantes, généralement pratiquées dans la partie basse du fuselage.

Plusieurs configurations sont possibles, à savoir un unique passage d'homme obturé par un ou plusieurs capots amovibles, ou encore plusieurs passages d'hommes obturés par un même capot amovible, ou chacun obturé par un ou plusieurs capots amovibles.

D'autre part, le/les capots amovibles peuvent constituer tout ou partie de la cloison supérieure. Celle-ci peut ainsi être uniquement constituée de capots ou d'un unique capot amovible, ou bien être formée par un ou plusieurs panneaux supérieurs fixes présentant une/des ouvertures formant les passages d'hommes obturés par les capots amovibles.

Enfin, l'invention a également pour objet un aéronef comprenant une partie avant du type de celles définies ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'une partie avant d'aéronef selon un mode de réalisation préféré de la présente invention ;
- la figure la représente une vue en section de la poutre de reprise des efforts de contrefiche implantée dans la partie avant d'aéronef montrée sur la figure 1 ;
- la figure 2 représente une vue schématique en perspective de l'environnement de la case de train d'atterrissage équipant la partie avant de l'aéronef ;
- la figure 3 représente une vue schématique en coupe transversale de la partie avant d'aéronef ;
- les figures 4a et 4b montrent la partie avant d'aéronef de manière plus détaillée, avec les capots amovibles de toit de case de train montés ;
- les figures 5a et 5b montrent la partie avant d'aéronef de manière plus détaillée, avec les capots amovibles de toit de case de train démontés ;
- la figure 6 est une vue similaire à celle de la figure 5a, avec un angle de perspective différent ;
- la figure 7 est une vue en perspective similaire à celles des figures 6 et 5a, avec la partie avant d'aéronef coupée longitudinalement par un plan vertical médian ; et
- la figure 8 représente une vue similaire à celle de la figure 2, avec la partie avant d'aéronef se présentant selon un autre mode de réalisation préféré de la présente invention.

### EXPOSÉ DÉTAILLÉ DE MODES DE RÉALISATION PRÉFÉRÉS

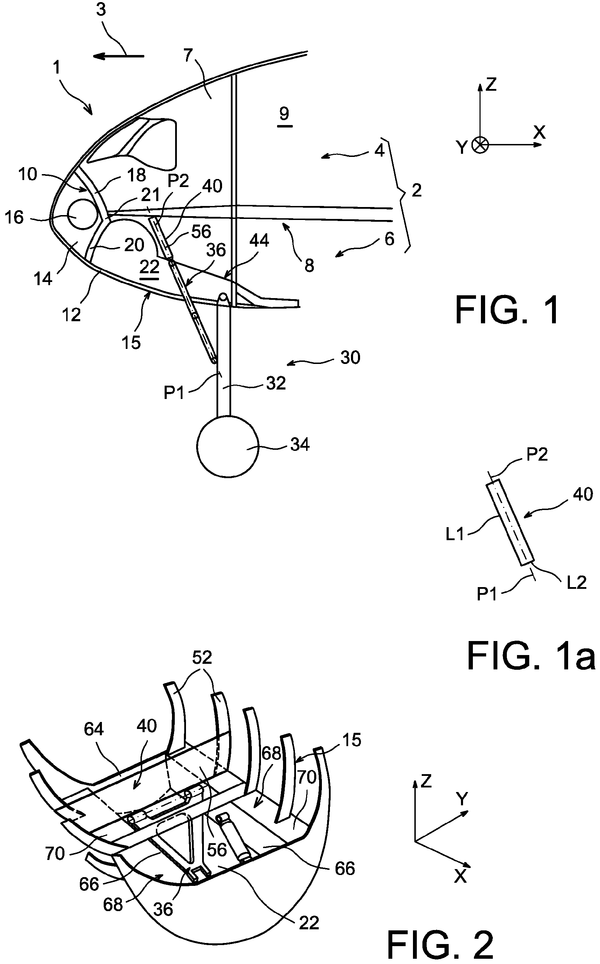

En référence à la figure 1, il est représenté une partie avant d'aéronef 1 ou pointe avant, selon un mode de réalisation préféré de la présente invention.

Dans toute la description qui va suivre, par convention, on appelle X la direction longitudinale de l'aéronef, Y la direction orientée transversalement par rapport à celui-ci, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les turboréacteurs, cette direction étant représentée schématiquement par la flèche 3.

La partie avant 1 comprend tout d'abord, dans sa partie la plus arrière, une zone pressurisée 2 au sein de laquelle se trouve un plancher de séparation 8 entre un compartiment pressurisé supérieur 4 généralement dédié au transport de personnes, et un compartiment pressurisé sous plancher 6 habituellement dédié à l'entreposage de matériels techniques propres à l'aéronef et/ou à l'entreposage de la charge marchande. D'une manière plus précise, le compartiment pressurisé supérieur 4 comprend généralement, de l'avant vers l'arrière, le cockpit 7 de l'aéronef suivi de la cabine passagers 9. D'autre part, le compartiment pressurisé sous plancher 6 comprend généralement, de l'avant vers l'arrière, une zone dite soute technique dédiée à l'entreposage de matériels techniques propres à l'aéronef, suivie d'une zone dite soute cargo dédiée à l'entreposage de la charge marchande.

La zone pressurisée 2 est délimitée vers l'avant par une paroi 10, qui définit avec la pointe extrême avant 12 du fuselage 15, une zone de radôme non pressurisée 14 servant au logement d'un ensemble radar 16. La paroi 10 prend en section la forme globale d'un V ouvert vers l'avant, dont les extrémités sont fixées au fuselage 15, et dont la pointe orientée vers l'arrière est fixée à l'extrémité avant du plancher 8. La partie haute 18 de la paroi 10 délimite le cockpit vers l'avant, tandis que sa partie basse constitue d'une part une cloison avant 20 d'une case de train d'atterrissage non pressurisée 22, et d'autre part un panneau 21 de délimitation du compartiment pressurisé sous plancher 6, qui chemine en partie au-dessus de la case de train 22.

La case de train avant est effectivement prévue pour loger un train d'atterrissage avant 30, dans un état rentré de celui-ci, différent de l'état sorti montré schématiquement sur la figure 1. Le train avant 30 est du type classique et connu de l'homme du métier. Il comprend globalement une jambe d'atterrisseur 32 montée articulée à l'une de ses extrémités sur la case de train, et portant un ensemble de roues 34 à son autre extrémité. Il comporte également un ou plusieurs vérins de déploiement (non représentés), ainsi qu'une contrefiche briseuse 36 généralement réalisée à partir de deux segments articulés l'un sur l'autre, et dont l'extrémité basse est montée articulée sur la jambe 32. Dans l'état sorti du train montré sur la figure 1, la contrefiche briseuse 36 est conçue pour adopter une configuration déployée dans laquelle les deux segments sont alignés, pour s'inscrire dans un plan de contrefiche P1 parallèle à la direction Y. Ce plan P1 est incliné par rapport à la verticale, par exemple d'un angle compris entre 20 et 50°.

Selon une particularité de l'invention, l'extrémité haute de la contrefiche briseuse 36 est articulée sur une poutre transversale 40 de reprise des efforts de contrefiche. La poutre 40, orientée selon la direction Y, présente une section en forme globale de rectangle montrée sur la figure la, dont le plan médian P1, parallèle à la longueur L1 et perpendiculaire à la largeur L2 du rectangle, est confondu avec ledit plan P1 de contrefiche.

La poutre 40 adopte une faible épaisseur permettant de l'assimiler à une « poutre plane ». Cette épaisseur, correspondant à la largeur L2 du rectangle précité, peut par exemple être de l'ordre de 50 à 60 mm. Cette valeur est proche de celle de l'épaisseur des structures fortes de la case de train, en particulier sa cloison étanche arrière de reprise des efforts du train d'atterrissage avant. A cet égard, il est noté que le rapport entre la longueur L1 et la largeur L2 de la section rectangulaire est préférentiellement compris entre 9 et 11, ce qui symbolise bien la forme « plane » de cette poutre. Celle-ci lui confère une grande capacité à intégrer les efforts du centre vers les extrémités, avec un minimum de déformation. En outre, la poutre 40 présente un faible allongement, c'est-à-dire une grande hauteur par rapport à sa longueur, cela se traduisant par un rapport entre la longueur L1 de la section rectangulaire de la poutre, et la longueur L de cette poutre référencée sur la figure 2, préférentiellement compris entre 4 et 5. Typiquement, la longueur L1 de la section, c'est-à-dire la hauteur de la poutre, est de l'ordre de 600 mm, tandis que la longueur L de la poutre, selon la direction Y, est comprise entre 240 et 300 cm. L'allongement pourrait être encore plus faible, mais il est ici fait en sorte que la poutre s'étende, selon la direction verticale Z, dans tout ou la quasi-intégralité de l'espace entre la cloison supérieure 44 de la case de train, et le plancher 8.

En référence conjointement aux figures 1 à 3, il est montré que la poutre 40, uniquement dédiée à la reprise des efforts introduits par la contrefiche briseuse 36, est agencée au-dessus de la case de train 22, et montée fixement à ses deux extrémités sur le fuselage 15. Ces extrémités sont préférentiellement rapportées sur la peau intérieure 48, séparée de la peau extérieure 50 du fuselage par des cadres transversaux 52. La poutre pourrait alternativement être fixée aux cadres 52, la diffusion des efforts s'effectuant au final par les peaux du fuselage. Pour ce faire, le mode de liaison au niveau du fuselage est réalisé de préférence à l'aide de simples cornières doubles (non représentées), disposées sur le fuselage au niveau des extrémités de la poutre. La liaison entre la poutre 40 et les cornières est quant à elle réalisée par de simples vis de cisaillement, sur toute la hauteur des bords de la poutre. Des surépaisseurs de matière peuvent être prévues au niveau des jonctions entre les pièces, pour renforcer leur rigidité.

La poutre 40 est ainsi dédiée exclusivement à la reprise des efforts de contrefiche, en étant reliée au fuselage seulement à ses extrémités. D'autre part, au niveau de la partie médiane de son chant longitudinal inférieur 56, la poutre est équipée de moyens de montage de la contrefiche 36, prenant ici la forme de chapes 60 solidaires du chant 56, et recevant des tenons 60 solidaires de l'extrémité haute de la contrefiche briseuse 36. Les efforts de contrefiche ne passent donc pas dans la cloison supérieure de la case de train, mais sont introduits directement dans la « poutre plane » pour ensuite cheminer par effet de cisaillement vers les extrémités de la poutre, puis enfin être diffusés dans le fuselage 15.

La poutre 40 peut être réalisée de différentes manières, et avec différents matériaux. Tout d'abord, il peut s'agir d'une forme globale de « caisson plan », par exemple un véritable caisson à double peaux, c'est-à-dire un caisson parallélépipédique réalisé à partir de six panneaux extérieurs travaillants. Des nervures transversales pourraient également être intégrées au sein du caisson. Cette solution est préférée car performante d'un point de vue mécanique, mais une autre solution à peau unique pourrait aussi être envisagée, sans sortir du cadre de l'invention.

Pour ce qui concerne les matériaux, des éléments métalliques peuvent être retenus, ou bien des éléments en matériau composite, de préférence du type comprenant un mélange de résine et de fibres de carbone. Le composite peut être de type monolithique, par assemblage de pièces du type rivetage, collage ou cocuisson. La solution à double peaux peut quant à elles être réalisée par une structure sandwich comprenant une âme centrale en nid d'abeilles, enserrée entre deux peaux composites.

En référence à présent aux figures 2 à 4b, il est rappelé que la case de train d'atterrissage avant 22 crée une ouverture conséquente dans la partie inférieure du fuselage. Les peaux et cadres sont ainsi troués pour assurer la sortie / la rentrée du train avant de la case de train. La case 22 est alors ouverte vers le bas, cette ouverture étant obturée par des capots articulés qui, en position fermée, reconstituent la surface aérodynamique de la partie de fuselage manquante.

La case 22 est délimitée par la cloison avant 20, une cloison arrière 64, la cloison supérieure 44, et deux cloisons latérales 66 opposées et en regard l'une de l'autre.

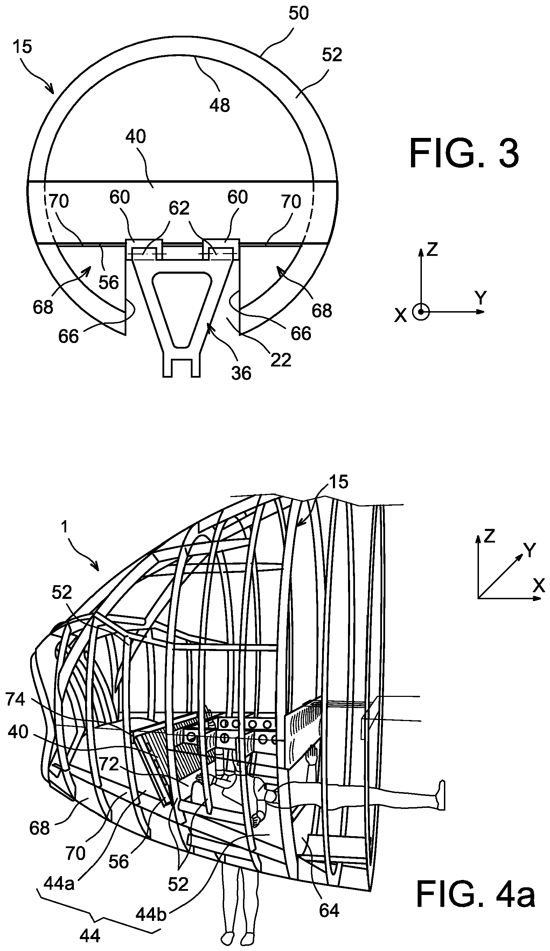

Chacune des cloisons latérales 66 s'étend préférentiellement sensiblement parallèlement aux directions X et Z, sur toute la longueur de la case de train 22. Chacune d'elles fait partie intégrante d'un caisson latéral 68 cheminant longitudinalement sur les côtés de la case 22, en étant formé conjointement avec un panneau supérieur 70 raccordé d'une part sur le chant longitudinal supérieur de la cloison latérale 66, et d'autre part sur le fuselage 15, de préférence sur les peaux. Ainsi, chaque caisson 68 présente de préférence une section transversale en forme globale de quart de cercle, de rayon correspondant à celui de la peau extérieure de fuselage 50, comme cela est le mieux visible sur la figure 3. Cela permet de rigidifier le fuselage troué par la présence de la case de train avant, et assure ainsi la rigidification des cloisons latérales de cette case de train avant, afin de limiter au mieux leur déformation.

Pour limiter les efforts à reprendre par les caissons 68, la partie avant 1 est également équipée de plusieurs renforts transversaux reliés à leurs extrémités au fuselage, et cheminant à proximité de la cloison supérieure 44.

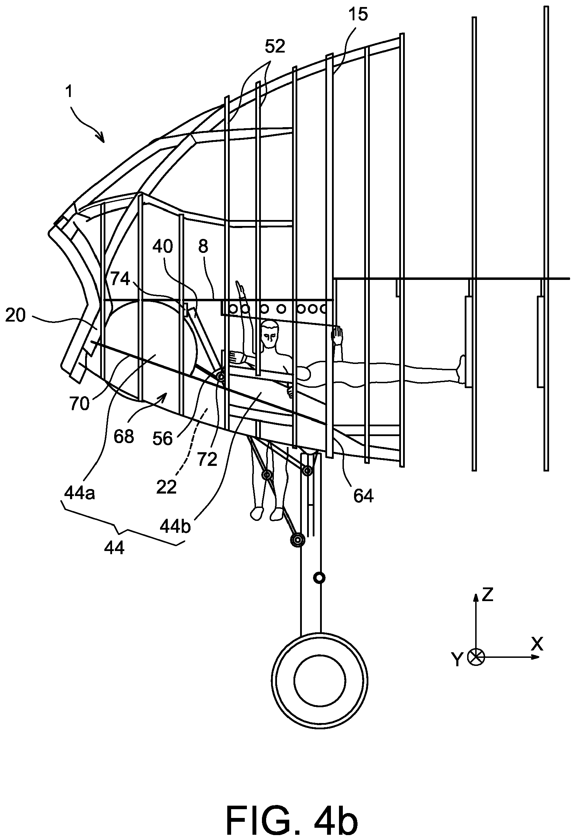

Dans le mode de réalisation préféré représenté, un premier longeron transversal 72, montré sur les figures 4a et 4b, relie avec ses extrémités deux portions éloignées d'un même cadre de fuselage fendu 52, en cheminant à proximité du chant inférieur 56 de la poutre 40, au-dessus de la cloison supérieure 44. Un second longeron transversal 74, également montré sur les figures 4a et 4b, relie lui aussi avec ses extrémités deux portions éloignées d'un même cadre de fuselage fendu 52, en cheminant à proximité d'un logement de roues de train et du chant supérieur de la poutre 40, c'est-à-dire à proximité du plancher 8. Ce même chant peut même être en appui sur le second longeron 74, comme cela a été illustré sur les figures.

De préférence, la cloison supérieure 44 comprend des capots amovibles permettant de libérer / obturer des passages d'homme. Dans le mode de réalisation préféré représenté, il est prévu un capot amovible avant 44a et un capot amovible arrière 44b, chacun monté de manière démontable sur la périphérie de la case. Ces deux capots 44a, 44b, montrés sur les figures 4a et 4b, constituent ici l'intégralité de la cloison supérieure 44. Ils peuvent tous deux présenter une forme bombée vers le haut, de manière à loger le train d'atterrissage avant dans son état rentré. Ils sont montés de manière réversible à leur périphérie, ce qui les conduit par ailleurs à être montés l'un sur l'autre au niveau de leur jonction, par exemple à proximité du premier longeron transversal 72 de renfort.

Les moyens de montage réversibles des capots 44a, 44b sont par exemple de simples vis de cisaillement traversant d'une part le bord des capots, qui disposent alors préférentiellement de renforts périphériques métalliques, et traversant d'autre part les éléments de la case de train qui supportent ces capots, ici les caissons latéraux 68.

Les capots amovibles 44a, 44b prennent de préférence la forme d'une structure sandwich en nid d'abeilles similaire à celle classiquement employée pour les capots articulés de fuselage obturant la partie basse de la case de train.

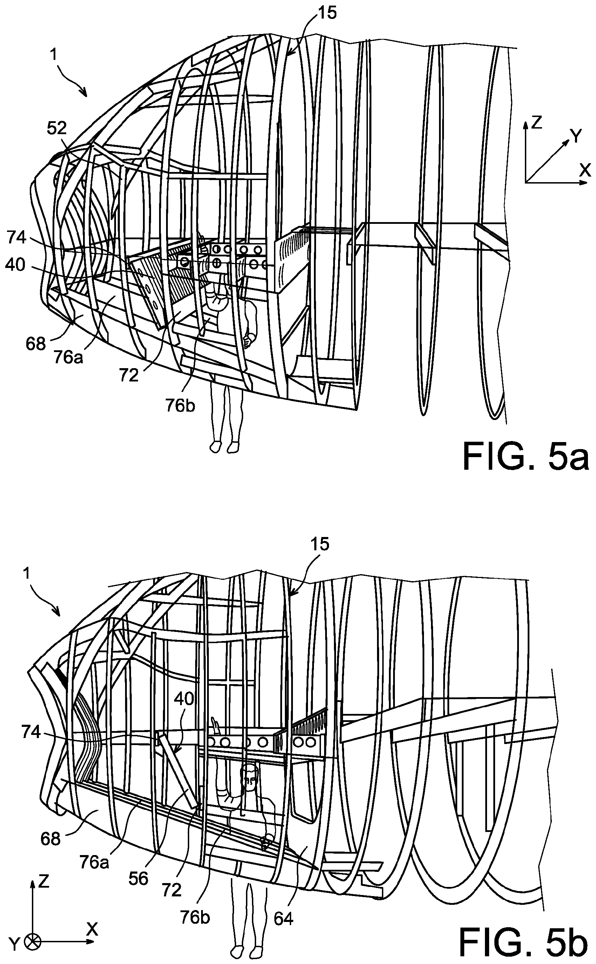

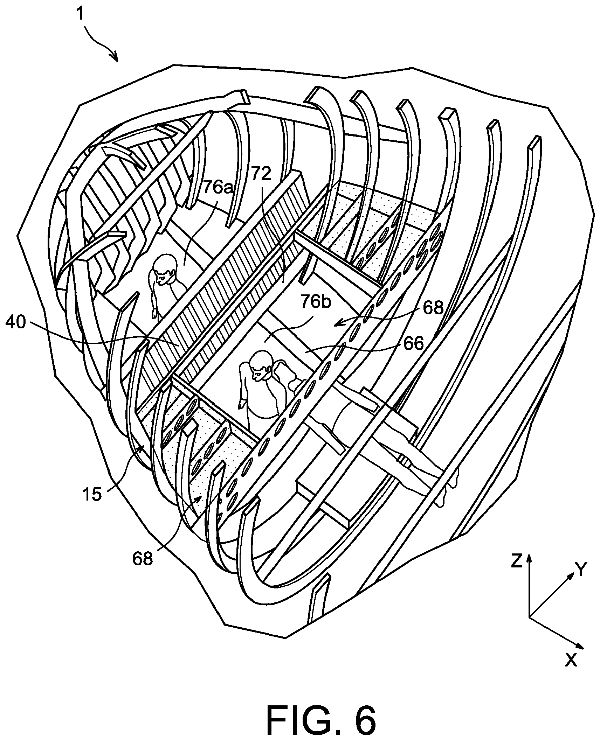

Sur les figures 5a, 5b, 6 et 7, la partie avant d'aéronef 1 a été représentée avec ses capots amovibles retirés. Chaque capot libère ainsi un passage d'homme d'une surface globale rectangulaire de l'ordre de 1 m², à travers lequel un opérateur peut se tenir débout pour réaliser des opérations de fabrication / manutention. Il s'agit d'un passage d'homme avant 76a, séparé d'un second passage d'homme 76b par le longeron 72.

Sur les figures 5a à 7, des opérateurs en position couchée et débout ont été représentés de manière à montrer les nombreuses possibilités d'accès conférées par ces passages d'hommes 76a, 76b. En particulier, l'opérateur peut se tenir débout à travers chacun des passages, avec sa tête se trouvant juste au-dessous du plancher 8.

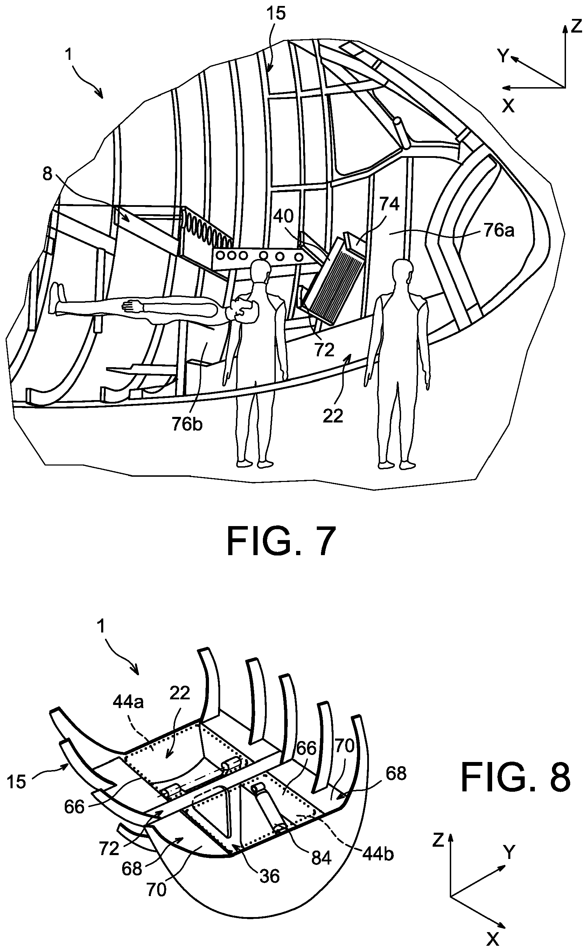

Selon un autre mode de réalisation préféré montré sur la figure 8, la contrefiche briseuse 36 est montée articulée sur les cloisons latérales 66 de la case 22, de même que le vérin de déploiement 84. Les efforts de contrefiches sont ainsi repris de manière satisfaisante par les caissons latéraux 68.

Dans ce mode de réalisation préféré, tout comme dans le précédent, les capots amovibles 76a, 76b sont conçus pour résister uniquement à la pression, et n'ont à reprendre aucune charge provenant directement du train avant 30. Ils peuvent par conséquent présenter une épaisseur faible, par exemple environ 100 mm.

Bien entendu, diverses modifications peuvent être apportées par l'homme du métier à l'invention qui vient d'être décrite, uniquement à titre d'exemples non limitatifs.

Les moyens de montage réversibles des capots 44a, 44b sont par exemple de simples vis de cisaillement traversant d'une part le bord des capots, qui disposent alors préférentiellement de renforts périphériques métalliques, et traversant d'autre part les éléments de la case de train qui supportent ces capots, ici les caissons latéraux 68.

Les capots amovibles 44a, 44b prennent de préférence la forme d'une structure sandwich en nid d'abeilles similaire à celle classiquement employée pour les capots articulés de fuselage obturant la partie basse de la case de train.

Sur les figures 5a, 5b, 6 et 7, la partie avant d'aéronef 1 a été représentée avec ses capots amovibles retirés. Chaque capot libère ainsi un passage d'homme d'une surface globale rectangulaire de l'ordre de 1 m², à travers lequel un opérateur peut se tenir débout pour réaliser des opérations de fabrication / manutention. Il s'agit d'un passage d'homme avant 76a, séparé d'un second passage d'homme 76b par le longeron 72.

Sur les figures 5a à 7, des opérateurs en position couchée et débout ont été représentés de manière à montrer les nombreuses possibilités d'accès conférées par ces passages d'hommes 76a, 76b. En particulier, l'opérateur peut se tenir débout à travers chacun des passages, avec sa tête se trouvant juste au-dessous du plancher 8.

Selon un autre mode de réalisation préféré montré sur la figure 8, la contrefiche briseuse 36 est montée articulée sur les cloisons latérales 66 de la case 22, de même que le vérin de déploiement 84. Les efforts de contrefiches sont ainsi repris de manière satisfaisante par les caissons latéraux 68.

Dans ce mode de réalisation préféré, tout comme dans le précédent, les capots amovibles 76a, 76b sont conçus pour résister uniquement à la pression, et n'ont à reprendre aucune charge provenant directement du train avant 30. Ils peuvent par conséquent présenter une épaisseur faible, par exemple environ 100 mm.

Bien entendu, diverses modifications peuvent être apportées par l'homme du métier à l'invention qui vient d'être décrite, uniquement à titre d'exemples non limitatifs.

## Revendications

1. Partie avant d'aéronef (1) comprenant un fuselage (15) et une case de train (22) logeant un train d'atterrissage avant (30) comprenant une contrefiche briseuse (36) conçue pour adopter une configuration déployée lorsque le train est sorti, configuration dans laquelle ladite contrefiche briseuse (36) s'inscrit dans un plan de contrefiche (P1) parallèle à la direction transversale (Y) de la partie avant,
**caractérisée en ce qu'**elle comprend une poutre transversale (40) de reprise des efforts de contrefiche agencée au-dessus de la case de train (22) et montée à ses deux extrémités sur le fuselage (15), ladite poutre (40) présentant une section en forme globale de rectangle dont le plan médian (P2) parallèle à la longueur du rectangle est confondu avec ledit plan de contrefiche (P1).

2. Partie avant d'aéronef selon la revendication 1, **caractérisée en ce que** le rapport entre la longueur (L1) de la section rectangulaire de la poutre et la longueur (L) de cette poutre (40) est compris entre 3 et 6, et plus préférentiellement entre 4 et 5, et/ou **en ce que** le rapport entre la longueur (L1) et la largeur (L2) de la section rectangulaire est compris entre 8 et 12, et plus préférentiellement entre 9 et 11.

3. Partie avant d'aéronef selon la revendication 1 ou la revendication 2, **caractérisée en ce que** ladite poutre (40) de reprise des efforts de contrefiche s'étend à partir d'une cloison supérieure (44) de la case de train, jusqu'à un plancher (8) de ladite partie avant d'aéronef.

4. Partie avant d'aéronef selon l'une quelconque des revendications précédentes, **caractérisée en ce que** lesdites deux extrémités de la poutre (40) sont montées sur une peau (48) dudit fuselage (15).

5. Partie avant d'aéronef selon l'une quelconque des revendications précédentes, **caractérisée en ce que** ladite poutre (40) présente un chant longitudinal inférieur (56) équipé de moyens de montage (60, 62) de ladite contrefiche briseuse (36).

6. Partie avant d'aéronef selon l'une quelconque des revendications précédentes, **caractérisée en ce que** ladite poutre (40) est réalisée en matériau composite.

7. Partie avant d'aéronef selon l'une quelconque des revendications précédentes, **caractérisée en ce que** la case de train d'atterrissage avant (22) comprend une cloison supérieure (44) comportant au moins un capot amovible (44a, 44b) obturant un passage d'homme (76a, 76b).

8. Aéronef comprenant une partie avant selon l'une quelconque des revendications précédentes.

## Patentansprüche

1. Vorderteil eines Luftfahrzeugs (1), umfassend einen Rumpf (15) und einen Fahrwerkschacht (22), der ein Frontfahrwerk (30) aufnimmt, das eine Einziehstrebe (36) aufweist, die ausgelegt ist, um eine expandierte Konfiguration anzunehmen, wenn das Fahrwerk ausgefahren ist, eine Konfiguration, bei der die Einziehstrebe (36) in einer Strebenebene (P1) eingeschrieben ist, die parallel zur Querrichtung (Y) des Vorderteils ist,
**dadurch gekennzeichnet, dass** er einen Querträger (40) zur Kraftaufnahme der Einziehstrebe aufweist, der über dem Fahrwerkschacht (22) angeordnet ist und an seinen zwei Enden an dem Rumpf (15) befestigt ist, wobei der Träger (40) einen Querschnitt in allgemeiner Form eines Rechtecks aufweist, dessen Mittelebene (P2), die parallel zu der Länge des Rechtecks ist, mit der Strebenebene (P1) zusammenfällt.

2. Vorderteil eines Luftfahrzeugs nach Anspruch 1, **dadurch gekennzeichnet, dass** das Verhältnis zwischen der Länge (L1) des rechteckigen Querschnitts des Trägers und der Länge (L) dieses Trägers (40) zwischen 3 und 6 und insbesondere zwischen 4 und 5 beträgt und/oder dass das Verhältnis zwischen der Länge (L1) und der Breite (L2) des rechteckigen Querschnitts zwischen 8 und 12 und insbesondere zwischen 9 und 11 beträgt.

3. Vorderteil eines Luftfahrzeugs nach Anspruch 1 oder 2, **dadurch gekennzeichnet, dass** sich der Träger (40) zur Kraftaufnahme der Einziehstrebe von einer oberen Trennwand (44) des Fahrwerkschachts bis zu einem Boden (8) des Vorderteils des Luftfahrzeugs erstreckt.

4. Vorderteil eines Luftfahrzeugs nach einem der vorhergehenden Ansprüche, **dadurch gekennzeichnet, dass** die zwei Enden des Trägers (40) an einer Haut (48) des Rumpfes (15) befestigt sind.

5. Vorderteil eines Luftfahrzeugs nach einem der vorhergehenden Ansprüche, **dadurch gekennzeichnet, dass** der Träger (40) eine untere Längskante (56) aufweist, die mit Befestigungsmitteln (60, 62) der Einziehstrebe (36) ausgestattet ist.

6. Vorderteil eines Luftfahrzeugs nach einem der vorhergehenden Ansprüche, **dadurch gekennzeichnet, dass** der Träger (40) aus Verbundmaterial hergestellt ist.

7. Vorderteil eines Luftfahrzeugs nach einem der vorhergehenden Ansprüche, **dadurch gekennzeichnet, dass** der Frontfahrwerkschacht (22) eine obere Trennwand (44) aufweist, die mindestens eine abnehmbare Abdeckung (44a, 44b) aufweist, die ein Mannloch (76a, 76b) verschließt.

8. Luftfahrzeug, umfassend einen Vorderteil nach einem der vorangehenden Ansprüche.

## Claims

1. Forward part of an aircraft (1) comprising a fuselage (15) and a landing gear well (22) housing a forward landing gear (30) comprising a breaker strut (36) designed to adopt an extended configuration when the landing gear is extended, configuration in which said breaker strut (36) lies in a strut plane (P1) parallel to the transverse direction (Y) of the forward part,
**characterised in that** it comprises a transverse beam (40) resisting strut reactions located above the landing gear well (22) and mounted on the fuselage (15) at its two ends, said beam (40) having a globally rectangular cross-section, in which the median plane (P2) parallel to the length of the rectangle is coincident with said strut plane (P1).

2. Forward part of an aircraft according to claim 1, **characterised in that** the the ratio between the length (L1) of the rectangular section of the beam and the length (L) of this beam (40) is between 3 and 6, and more preferably between 4 and 5, and/or the ratio between the length (L1) and the width (L2) of the rectangular section is between 8 and 12, and more preferably between 9 and 11.

3. Forward part of an aircraft according to claim 1 or claim 2, **characterised in that** said strut force resistance beam (40) extends from a top partition (44) of the landing gear compartment, down to a floor (8) of said forward part of the aircraft.

4. Forward part of an aircraft according to any one of the previous claims, **characterised in that** said two ends of the beam (40) are mounted on a skin (48) of said fuselage (15).

5. Forward part of an aircraft according to any one of the previous claims, **characterised in that** said beam (40) has a lower longitudinal edge (56) provided with means of assembly (60, 62) of said breaker strut (36).

6. Forward part of an aircraft according to any one of the previous claims, **characterised in that** said beam (40) is made of a composite material.

7. forward part of an aircraft according to any one of the previous claims, **characterised in that** the forward landing gear well (22) comprises an upper partition (44) comprising at least one removable cover (44a, 44b) closing off a manhole (76a, 76b).

8. Aircraft comprising a forward part according to any one of the previous claims.
